(19) Europäisches Patentamt
European Patent Office
Office européen des brevets

(11) **EP 3 745 523 B1**

(12) **EUROPEAN PATENT SPECIFICATION**

(45) Date of publication and mention
of the grant of the patent:
**17.08.2022  Bulletin 2022/33**

(21) Application number: **18907695.3**

(22) Date of filing: **02.04.2018**

(51) International Patent Classification (IPC):
***H01M 50/50*** (2021.01)   ***H01M 50/55*** (2021.01)
***H01M 50/533*** (2021.01)   ***H01M 50/553*** (2021.01)

(52) Cooperative Patent Classification (CPC):
**H01M 50/50; H01M 50/533; H01M 50/55; H01M 50/553;** H01M 2220/20; Y02E 60/10; Y02P 70/50

(86) International application number:
**PCT/CN2018/081596**

(87) International publication number:
**WO 2019/165677 (06.09.2019 Gazette 2019/36)**

(54) **SECONDARY BATTERY AND AUTOMOBILE**

SEKUNDÄRBATTERIE UND KRAFTFAHRZEUG

BATTERIE SECONDAIRE ET AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2018  CN 201810173296**

(43) Date of publication of application:
**02.12.2020  Bulletin 2020/49**

(73) Proprietor: **Contemporary Amperex Technology Co., Limited**
**Ningde City, Fujian 352100 (CN)**

(72) Inventors:
 • **CHEN, Bing**
   **Ningde, Fujian 352100 (CN)**
 • **GUO, Zhijun**
   **Ningde, Fujian 352100 (CN)**
 • **WANG, Peng**
   **Ningde, Fujian 352100 (CN)**
 • **ZHANG, Jie**
   **Ningde, Fujian 352100 (CN)**
 • **ZHOU, Yong**
   **Ningde, Fujian 352100 (CN)**

(74) Representative: **Vossius & Partner Patentanwälte Rechtsanwälte mbB**
**Siebertstrasse 3**
**81675 München (DE)**

(56) References cited:
**CN-A- 106 299 449    CN-A- 107 369 853**
**CN-U- 202 167 560    CN-U- 204 348 795**
**CN-Y- 201 194 236    US-A1- 2010 323 239**

## Description

## TECHNICAL FIELD

The present application relates to the technical field of energy storage components, and in particular, to a secondary battery and a vehicle.

## BACKGROUND

Under double pressure of energy demand and environmental protection, electric vehicles are growing in applications. As an important power source of electric vehicles, secondary batteries have a crucial effect on the performance and safety of the electric vehicles. Because of higher requirements on the endurance of the vehicles and regulatory policies, higher requirements are imposed on the energy density, cycle life and safety of the secondary batteries. A secondary battery includes an electrode assembly and an electrode terminal, the electrode assembly includes a body and a tab extending from the body, and the body is formed by winding a first electrode plate, a separator, and a second electrode plate; to connect the electrode terminal with the tab so as to transmit out a current produced by the electrode assembly, the secondary battery further includes a connection member, one end of the connection member is connected to the electrode terminal, and the other end of the connection member is connected to the tab.

CN 107 369 853A provides an electrochemistry energy storing device, including: a top cover equipped with terminal posts with the opposite electric polarities, a coiling type naked battery cell equipped with tabs with the opposite electric polarities, and two conductive switchover sheets with opposite electric polarities electrically connected with the terminal posts of the top cover with the opposite electric polarities and the tabs with the opposite electric polarities. Each conductive switchover sheet is equipped with a top cover side connecting part which is electrically connected with the terminal post on the top cover with the corresponding electric polarity, and a tab side connecting part which stretches from the top cover side connecting part to a direction away from the top cover. A lug boss which projects from the internal surface of the tab side connecting part toward the coiling type naked battery cell, is inserted into an internal space formed by the tab with the corresponding electric polarity, contacts and is electrically connected with the tab with the corresponding electric polarity.

## SUMMARY

The present application provides a secondary battery and a vehicle, so as to solve the above problems.

A first aspect of the present application provides a secondary battery, including:

> a cap plate;

an electrode terminal, disposed on the cap plate;
an electrode assembly, including a body and a tab extending from the body;
and
a connection member, including a first connecting plate connected to the tab, a second connecting plate connected to the electrode terminal, and a support plate connecting the first connecting plate and the second connecting plate, a width direction of the support plate is consistent with a thickness direction of the secondary battery, at least a part of the support plate protruding, relative to the first connecting plate, towards a side close to the body, and the protruding part of the support plate is attached to the body; and a minimum distance between the support plate and a bottom surface of the electrode assembly in a height direction of the secondary battery is defined as a bare height H of the body on its side, a size of the body in a length direction of the secondary battery is defined as a body length L, and the bare height H and the body length L satisfy the following relationship:

$$0.1 \leq H/L \leq 0.8.$$

Optionally, in the height direction, an end of the first connecting plate close to the cap plate extends beyond an end of the tab close to the cap plate.

Optionally, the bare height H and the body length L satisfy the following relationship:

$$0.2 \leq H/L \leq 0.6.$$

Optionally, the bare height H is in a range of 18 mm to 72 mm, and the body length L is in a range of 90 mm to 300 mm.

Optionally, the tab is disposed on a side of the body close to the cap plate, and a ratio of a size A of the tab in the height direction of the secondary battery to a height B of the body is in a range of 0.2 to 0.5.

Optionally, an interval is provided between the tab and the cap plate in the height direction.

Optionally, in the height direction, an end of the tab away from the cap plate extends beyond an end of the first connecting plate away from the cap plate.

Optionally, the tab is disposed on one side of the body in the thickness direction of the secondary battery.

Optionally, two electrode assemblies are disposed side by side in the thickness direction, and the tabs of the two electrode assemblies are respectively located on two sides of the two electrode assemblies facing away from each other.

Optionally, two sides of the support plate in the thickness direction of the secondary battery are connected with the first connecting plates respectively, and the two first connecting plates are fixedly connected to the tabs on the same side respectively.

Optionally, the support plate includes a first part and a second part that are connected to each other, an area of a cross section of the first part is smaller than that of the second part, and the first connecting plate is connected to the first part.

Optionally, the first connecting plate extends in the thickness direction of the secondary battery, and the tab is disposed between the first connecting plate and the body.

A second aspect of the present application provides a vehicle, including the secondary battery according to any of the preceding implementations.

It should be understood that the foregoing general descriptions and the following detailed descriptions are merely examples, and do not constitute any limitation on the present application.

## BRIEF DESCRIPTION OF DRAWINGS

FIG. 1 is a schematic structural diagram of a specific embodiment of a secondary battery according to the present application;

FIG. 2 is an exploded view of a specific embodiment of a secondary battery according to the present application;

FIG. 3 is a side view of a specific embodiment of a secondary battery according to the present application;

FIG. 4 is a partial sectional view of a specific embodiment of a secondary battery according to the present application;

FIG. 5 is a schematic structural diagram of a specific embodiment of an electrode assembly in a secondary battery according to the present application;

FIG. 6 is a schematic structural diagram of a specific embodiment of a connection member in an assembly process in a secondary battery according to the present application; and

FIG. 7 is a schematic structural diagram of the specific embodiment of the connection member shown in FIG. 6 after assembly is complete.

Reference numerals:

10. cap plate;
20. electrode terminal;
30. electrode assembly;

    31. body;
    32. tab;

40. connection member;

41. first connecting plate;
42. second connecting plate;
43. support plate;

    431. first part;
    432. second part; and

  50. housing.

The accompanying drawings herein are incorporated in the specification as a part of the specification, illustrate embodiments that are in accordance with the present application, and are used together with the specification to explain the principle of the present application.

## DESCRIPTION OF EMBODIMENTS

The following describes the present application in detail by using specific embodiments and with reference to the accompanying drawings.

The directional terms such as "above", "under", "left", and "right" described in the embodiments of the present application are described from the angles shown in the accompanying drawings, and should not be construed as limitation to the embodiments of the present application. In addition, in the context, it should be understood that when an element is referred to as being connected "above" or "under" another element, the element can be not only directly connected "above" or "under" the another element, but also indirectly connected "above" or "under" the another element through an intermediate element.

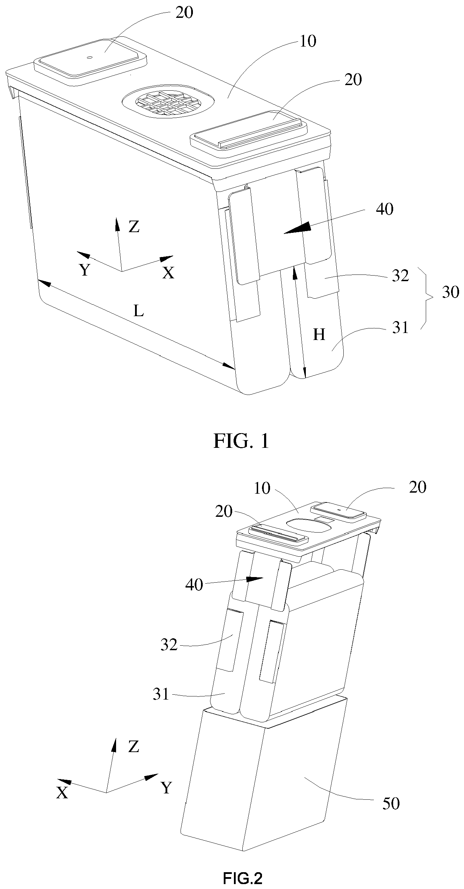

In an actual application, the tab is prone to be broken due to the vibration and shock subjected by the secondary battery, and in the related technology, the tab and the connection member usually have a larger size in a height direction of the secondary battery to solve a battery safety problem resulting from breakage of the tab. With the increasing sizes of the tab and the connection member in the height direction of the secondary battery, the tab and the connection member may block discharge of gas from internal of the electrode assembly, and especially when the connection member is attached to the body, the gas discharge from the electrode assembly is particularly difficult at a blocked area of the body. If a speed of gas production within the electrode assembly is greater than a speed of gas discharge, bubbles will remain in the electrolyte, which affects transmission of lithium-ions in the electrolyte, and may cause black spots on the electrode plate, thereby decreasing the energy density and cycle life of the secondary battery and possibly resulting in potential safety hazards. A secondary battery shown in FIG. 1 is used as an object, a height direction of the secondary battery is taken as a height direction Z, a length direction of the secondary battery is taken as a length direction Y, and a thickness direction of the secondary battery is taken as a thickness direction X.

As shown in FIG. 1 to FIG. 7, an embodiment of the present application provides a secondary battery, including a cap plate 10, an electrode terminal 20, an electrode assembly 30, and a connection member 40. The electrode terminal 20 is disposed on the cap plate 10; the electrode assembly 30 includes a body 31 and a tab 32 extending from the body 31; the connection member 40 includes a first connecting plate 41 connected to the tab 32, a second connecting plate 42 connected to the electrode terminal 20, and a support plate 43 connecting the first connecting plate 41 and the second connecting plate 42; a width direction of the support plate 43 is consistent with a thickness direction of the body 31 (that is, the thickness direction X of the secondary battery), at least a part of the support plate 43 protrudes, relative to the first connecting plate 41, towards a side close to the body 31, and the protruding part of the support plate 43 is attached to the body 31. To ensure that gas in a portion of the body 31 blocked by the protruding part can be quickly discharged, a size of the support plate 43 is smaller than that of the body 31 in the height direction Z of the secondary battery, and a side of the body 31 on which the tab 32 extends from the body 31 is partially bare, so that the gas inside the electrode assembly 30 is discharged to outside.

Specifically, in the height direction Z of the secondary battery, a minimum distance between the support plate 43 and a bottom surface of the electrode assembly 30 is defined as a bare height H of the body 31 on its side (namely the side on which the tab 32 extends from the body 31), a size of the body 31 in the length direction Y of the secondary battery is defined as a body length L, and the bare height H and the body length L satisfy the following relationship: $0.1 \leq H/L \leq 0.8$, for example, H/L is 0.1, 0.15, 0.2, 0.5, 0.55, 0.6, 0.7, 0.79, 0.8, or the like.

It can be understood that the electrode assembly 30 includes a first electrode plate, a second electrode plate, and a separator disposed between the first electrode plate and the second electrode plate, and an active substance on the first electrode plate and the second electrode plate is mainly disposed in the body 31; to increase an energy density of the secondary battery, it needs to increase the body length L as much as possible, while this may cause a longer gas discharge path inside the electrode assembly 30, and is not good for effective release of gas; especially for some active substance producing a relatively large amount of gas, once the gas inside the electrode assembly 30 cannot be effectively released, a lot of gas accumulates between the first electrode plate, the second electrode plate and the separator, and cuts off a transmission channel of ions in the active substance, which may cause the black spots to be produced on the electrode assembly 30 after formation, and greatly affect the energy density and cycle life of the secondary battery.

In the present application, the side of the body 31 is partially bare, and the gas produced inside the electrode assembly 30 flows to the side of the body 31 through a gap between the first electrode plate, the second electrode plate and the separator, and is discharged from the bare part; considering that the length of the body 31 of the electrode assembly 30 affects the length of the gas discharge path inside the electrode assembly 30 and a bare area of the side of the body 31 affects a gas discharge speed, in the present application, the size of the tab 32 in the height direction Z of the secondary battery is smaller than the size of the body 31 in the height direction Z, and a ratio of the bare height H of the electrode assembly 30 to the body length L of the body 31 of the electrode assembly 30 is set to a range of 0.1 to 0.8; in this way, the gas path of the electrode assembly 30 matches the gas discharge speed, and further the gas production speed inside the electrode assembly 30 is smaller than the gas discharge speed, thereby ensuring normal transmission of ions in the electrolyte, preventing the black spots from being produced on the first electrode plate or the second electrode plate, increasing the energy density and cycle life of the secondary battery, and improving safety of the secondary battery.

Further, the bare height H and the body length L satisfy the following relationship: $0.2 \leq H/L \leq 0.6$, and for example, H/L is 0.2, 0.3, 0.4, 0.5, 0.55, 0.58, 0.6, or the like, so that the gas path of the electrode assembly 30 better matches the gas discharge speed, thereby further increasing the energy density and cycle life of the secondary battery and improving safety of the secondary battery.

When H/L is less than 0.1, the bare height H of the body 31 is relatively small, the gas discharge efficiency of the electrode assembly is relatively low, and meanwhile, the body length L is relatively large, causing that the gas discharge path is increased; consequently, the black spots are produced on the electrode assembly 30 after formation, greatly affecting the energy density and cycle life of the secondary battery. When H/L is greater than 0.8, the bare height H of the body 31 is relatively large; although the gas discharge speed inside the electrode assembly 30 being greater than the gas production speed may be ensured, the size of the support plate 43 is reduced in the height direction Z, and meanwhile, a contact area between the tab 32 and the first connecting plate 41 may be reduced, causing overheating of the contact area between the tab 32 and the first connecting plate 41, thereby increasing a temperature of the electrode assembly 30 and affecting the cycle life of the secondary battery.

Preferably, the bare height H is set to be in a range of 18 mm to 72 mm, such as 18 mm, 20 mm, 30 mm, 40 mm, 50 mm, 60 mm, 65 mm, 70 mm, and 72 mm, which not only ensures the gas discharge efficiency of the electrode assembly 30, but also can ensure the contact area between the tab 32 and the first connecting plate 41 so as to prevent overheating of the contact area between the tab 32 and the first connecting plate 41; moreover, such setting can also ensure the connection strength between the first connecting plate 41 and the tab 32, thereby increasing reliability of the secondary battery.

As described above, if body length L is too large, the gas discharge path is lengthened and the gas inside the secondary battery cannot be discharge timely; if the body length L is too small, the energy density of the secondary battery is decreased; therefore, in the present application, the body length L is preferably in a range of 90 mm to 300 mm, such as 90 mm, 95 mm, 120 mm, 150 mm, 180 mm, 200 mm, 220 mm, 250 mm, 280 mm, 290 mm, 295 mm, or 300 mm, so as to ensure that the gas discharge path of the electrode assembly 30 is not too long, and also ensure the energy density of the secondary battery.

It can be understood that if a size A of the tab 32 in the height direction Z is excessively small, severe overheating may occur at the tab 32 during use of the secondary battery, especially at the contact part between the tab 32 and the first connecting plate 41; if the size A is excessively large, the bare area on the side of the body 31 will reduce, causing gas discharge problems. In one embodiment, a ratio of the size A of the tab 32 in the height direction Z of the secondary battery to a height B of the body 31 (the height B is the size of the body 31 in the height direction Z) is in a range of 0.2 to 0.5, and for example, A/B is 0.2, 0.28, 0.3, 0.4, 0.5, or the like, which not only can ensure a current flow area at the contact part between the tab 32 and the first connecting plate 41 to avoid safety hazards caused by overheating, but also can ensure smooth gas discharge of the electrode assembly 30.

Preferably, the tab 32 is disposed on one side of the body 31 close to the cap plate 10; as such, a size of the first connecting plate 41 in the height direction Z may be reduced, thereby facilitating connection between the tab 32 and the first connecting plate 41, and a size of the connection member 40 in the height direction Z also may be reduced, thereby reducing the cost.

In the foregoing structure, the reduce of the size of the connection member 40 in the height direction Z reduces the contact area between the tab 32 and the first connecting plate 41, which may cause partial overheating of the contact part between the tab 32 and the first connecting plate 41; to solve this problem, an end of the first connecting plate 41 close to the cap plate 10 extends beyond an end of the tab 32 close to the cap plate 10 in the height direction Z, that is, the first connecting plate 41 includes a connection part connected to the tab 32, and a cooling part, wherein the connection part is connected to the cooling part, and the cooling part is disposed on a side of the first connecting plate 41 close to the cap plate 10, so as to increase an area of the first connecting plate 41, facilitate the cooling and thus alleviate partial overheating at the connection part between the first connecting plate 41 and the tab 32.

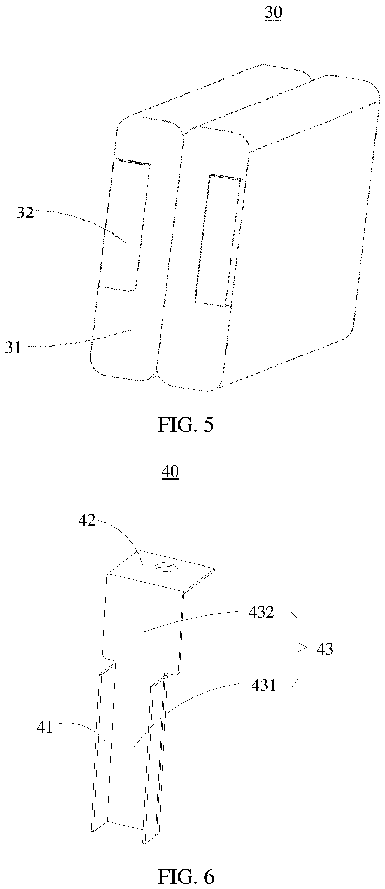

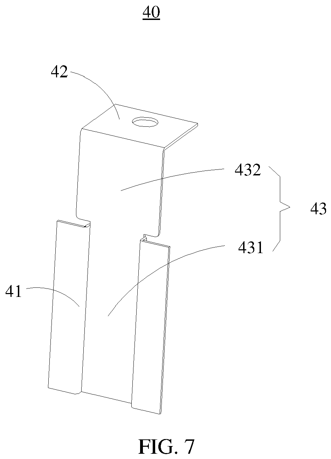

To minimize the size of the secondary battery in the thickness direction X and increase the energy density of the secondary battery, both the connection member 40 and the tab 32 do not extend beyond the body 31 in the thickness direction X; therefore, the first connecting plate 41 is preferably connected to one side of the protruding part of the support plate 43 in the thickness direction X, as shown in FIG. 1. When the secondary battery works, a current inside the secondary battery is first conducted by the electrode assembly 30 to the first connecting plate 41 through a welding part between the tab 32 and the first connecting plate 41, and is then conducted to the support plate 43; in the case that the thickness of the support plate 43 is equal to that of the first connecting plate 41, the support plate 43 generates a relatively large amount of heat, and especially when both sides of the support plate 43 in the thickness direction X are connected to the first connecting plates 41, since the current passing through the support plate 43 is greater than the current passing through the first connecting plate 41, the amount of the generated heat is severely large. To dissipate the heat from the support plate 43 as quickly as possible and improve safety of the secondary battery, the support plate 43 in the present application includes a first part 431 and a second part 432, as shown in FIG. 6 and FIG. 7, an area of cross section of the first part 431 is smaller than that of the second part 432, and the first connecting plate 41, the first part 431, the second part 432, and the second connecting plate 42 are connected in sequence to increase the cooling area of the support plate 43. Wherein, the first part 431 is the protruding part of the support plate 43 as described above, and the cross section is vertical to the height direction Z of the secondary battery.

As shown in FIG. 2, the secondary battery further includes a housing 50. The cap plate 10 covers on top of the housing 50, and the electrode assembly 30 is received within the housing 50. The electrode terminal 20 is disposed on the cap plate 10, the second connecting plate 42 is bent relative to the support plate 43 and is located on the side of the body 31 close to the cap plate 10 to facilitate connection with the electrode terminal 20.

The above electrode assembly 30 includes two tabs 32, namely, a first tab and a second tab, and correspondingly, there are two electrode terminals 20 and two connection members 40; the two electrode terminals 20 includes a first electrode terminal and a second electrode terminal, the first tab is connected to the first electrode terminal via one connection member 40, the second tab is connected to the second electrode terminal via the other connection member 40, and the first tab and the second tab may be located on two sides of the body 31 in the length direction Y, respectively; the specific connection manner may be the same for the two tabs 32, and below, the description is made by taking the manner, in which one of the tabs 32 is connected to one electrode terminal 20 via one connection member 40, as an example. Specifically, the electrode assembly 30 may be formed by winding, that is, the body 31 is formed by winding the first electrode plate, the second electrode plate, and the separator. In various winding layers, first conductive parts extending from the first electrode plate are stacked to form the first tab, and second conductive parts extending from the second electrode plate are stacked to form the second tab. Specifically, the first conductive parts and the second conductive parts may be cut to form the first tab and the second tab respectively, so that the size of the tab 32 (including the first tab and the second tab) in the height direction Z of the secondary battery is smaller than the size of the body 31, thereby facilitating gas discharge of the electrode assembly 30.

After the tab 32 is connected to the first connecting plate 41, the tab 32 is bent relative to the length direction Y to reduce the size of the secondary battery in the length direction Y; because the tab 32 is formed by cutting and stacking the conductive parts (including the first conductive parts and the second conductive parts), the conductive parts may be misaligned at an end of the tab 32 (including two ends in the height direction Z and an end in an extension direction of the tab 32), and the larger the thickness (the size of the tab 32 in a stacking direction of the conductive parts) of the tab 32, the more severe the misalignment, resulting in that the conductive parts on the innermost side may be highly redundant, while the conductive parts on the outermost side may not be connected to the first connecting plate 41.

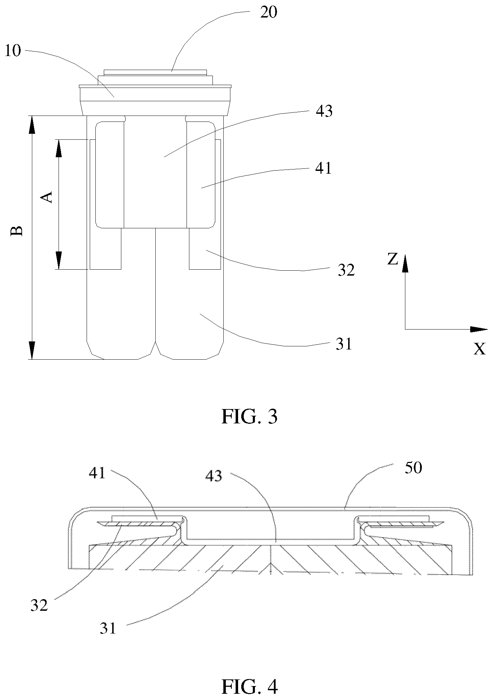

In one embodiment, the tab 32 is disposed on one side of the body 31 in the thickness direction X of the secondary battery; specifically, the body 31 includes an initial winding layer, the initial winding layer is a winding start part of the electrode plate of the body 31 at the innermost layer, and the tab 32 extends out on the one side in the thickness direction X from the initial winding layer; that is, among the various winding layers, merely the winding layers on a side of the initial winding layer are extended with the conductive parts, as shown in FIG. 4; as such, when the stacking thickness of the body 31 remains the same, the thickness of the tab 32 is obviously reduced, and when being bent, the misalignment between ends of the innermost conductive part (close to the first connecting plate 41) and the outermost conductive part can be mitigated, so as to facilitate connection of the outermost conductive part with the first connecting plate 4, and the redundancy of the innermost conductive part is also obviously reduced, thereby decreasing the risk of short circuit of the secondary battery resulting from possible insertion of the redundant conductive part into the body 31 due to squeezing on the excessively redundant conductive part. Therefore, such manner of extending the tab 32 from one side of the body 31 in the thickness direction X helps the connection of the electrode assembly 30 with the first connecting plate 41 during assembly of the secondary battery and also can improve safety of the secondary battery. Wherein, the initial winding layer may be a winding start part of the first electrode plate and the first conductive part does not extend from this part; each of the first tab and the second tab is located on a side of the initial winding layer in the thickness direction X.

The secondary battery may be provided with one electrode assembly 30 or a plurality of electrode assemblies, for example, two or more electrode assemblies. As shown in FIG. 1 to FIG. 4, two electrode assemblies 30 are disposed side by side in the thickness direction X, and the tabs 32 of the two electrode assemblies 30 are respectively located on two sides of the two electrode assemblies 30 facing away from each other; in other words, the body 31 includes two sides in the thickness direction, which are a first side on which the tab 32 extends out and a second side opposite to the first side, and the second sides of the two bodies 31 are disposed adjacent to each other; in this way, the tabs 32 of the two electrode assemblies 30 are disposed with a relatively large space, do not interfere with each other, and may be bent separately, and the mutual interference of the tabs 32 of the two electrode assemblies 30 may be avoided during the bending thereof.

When two electrode assemblies 30 are provided, only one first connecting plate 41 may be provided; in this case, two tabs 32 on the same side of the two electrode assemblies 30 are connected to two sides of the first connecting plate 41 respectively, and then the first connecting plate 41 is bent; as a result, a space that matches the thickness of the two tabs 32 needs to be provided in the secondary battery in the length direction Y, affecting the energy density of the secondary battery. In one embodiment, two sides of the support plate 43 in the thickness direction X of the body 31 are connected to the first connecting plates 41 respectively, and when the support plate 43 includes the first part 431, two first connecting plates 41 are connected to two sides of the first part 431, as shown in FIG. 6 and FIG. 7; the two first connecting plates 41 are fixedly connected to the tabs 32 on the same side respectively, as shown in FIG. 1, FIG. 3, and FIG. 4; with such structure, after the two first connecting plates 41 are connected to the two tabs 32 and the two tabs 32 are bent, a space that matches the thickness of only one tab 32 needs to be provided on a single side of the secondary battery in the length direction Y, and thus, the size of the secondary battery in the length direction Y can be obviously reduced and the energy density of the secondary battery may be increased. It should be noted that the above two tabs 32 may be bent towards each other or away from each other, and in the case that the two tabs 32 are bent towards each other, the two tabs 32 after bent are spaced apart or have their ends attached in the thickness direction X of the secondary battery.

Preferably, after the tabs 32 are bent, the first connecting plate 41 extends in the thickness direction X, and the tabs 32 are disposed between the first connecting plate 41 and the body 31; in other words, the tabs 32 are each bent away from the second side of the body 31 on which the tabs 32 are each located, and the first connecting plate 41 is located on a surface of the tabs 32 facing away from the body 31, as shown in FIG. 4. Especially when the support plate 43 includes the protruding part, the foregoing structure enables the tabs 32 to fully use the size of the support plate 43 in the length direction Y.

During assembly, the support plate 43 may be attached to the body 31, and in this case, the first connecting plate 41 is approximately vertical to the support plate 43, as shown in FIG. 6; at first, the first connecting plate 41 is welded to the tab 32, and then the first connecting plate 41 is bent relative to the support plate 43 so that the connection member 40 is formed as a structure shown in FIG. 7.

Since the tab 32 is formed by stacking and cutting the conductive parts (including the first conductive parts and the second conductive parts), the various conductive parts obtained by cutting may be misaligned at the end of the tab 32 close to the cap plate 10; and during installation of the electrode assembly 30 and the cap plate 10, the cap plate 10 may press the end of the tab 32 close to the cap plate 10 and bend this end, resulting in that the tab 32 cannot be effectively welded to the first connecting plate 41 and thus severe overheating of the welding part may occur. To avoid the above problem, an interval is provided between the tab 32 and the cap plate 10 in the height direction Z, to avoid bending of the tab 32 caused by pressing from the cap plate 10. Likewise, the conductive parts obtained by cutting may be also misaligned at the end of the tab 32 away from the cap plate 10, and if the first connecting plate 41 is aligned with this end, the welding part between the first connecting plate 41 and the tab 32 may not penetrate through all the conductive parts, causing false welding of the tab 32 and thereby affecting the electric performance of the secondary battery. To solve this problem, the end of the tab 32 away from the cap plate 10 extends beyond the end of the first connecting plate 41 away from the cap plate 10 in the height direction Z, and in this way, at the end of the tab 32 away from the cap plate 10, the welding part between the tab 32 and the first connecting plate 41 can penetrate through as many layers of conductive parts as possible so as to improve the electric performance of the secondary battery. Preferably, at the end of the tab 32 away from the cap plate 10, the first connecting plate 41 does not extend beyond the conductive part closest to the cap plate 10 at the end, thereby further improving the electric performance of the secondary battery.

Because the misalignment may also occur to the tab 32 in the extension direction of the tab 32, the end of the tab 32 extends beyond the first connecting plate 41 in the thickness direction X, to ensure that all conductive parts at this end can be connected to the first connecting plate 41.

It should be noted that the above tab 32 may be connected to the first connecting plate 41 by welding.

Further, the present application further provides a vehicle, including the secondary battery according to any of the foregoing embodiments.

## Claims

1. A secondary battery, comprising:

    a cap plate (10);
    an electrode terminal (20), disposed on the cap plate (10);
    an electrode assembly (30), comprising a body (31) and a tab (32) extending from the body (31); and
    a connection member (40), comprising a first connecting plate (41) connected to the tab (32), a second connecting plate (42) connected to the electrode terminal (20) and a support plate (43) connecting the first connecting plate (41) and the second connecting plate (42), a width direction of the support plate (43) being consistent with a thickness direction of the secondary battery,
    **characterized in that**, at least a part of the support plate (43) protruding relative to the first connecting plate (41) toward a side close to the body (31), and the protruding part of the support plate (43) being attached to the body (31), and
    a minimum distance between the support plate (43) and a bottom surface of the electrode assembly (30) in a height direction of the secondary battery is defined as a bare height H of the body (31) on its side, a size of the body (31) in a length direction of the secondary battery is defined as a body length L, and the bare height H and the body length L satisfy the following relationship:

$$0.1 \leq \text{H/L} \leq 0.8.$$

2. The secondary battery according to claim 1, **characterized in that**, in the height direction, an end of the first connecting plate (41) close to the cap plate (10) extends beyond an end of the tab (32) close to the cap plate (10).

3. The secondary battery according to claim 1 or claim 2, **characterized in that**, the bare height H and the body length L satisfy the following relationship:

$$0.2 \leq \text{H/L} \leq 0.6.$$

4. The secondary battery according to any of claims 1 to 3, **characterized in that**, the bare height H is in a range of 18 mm to 72 mm, and the body length L is in a range of 90 mm to 300 mm.

5. The secondary battery according to claim 4, **characterized in that**, the tab (32) is disposed on a side of the body (31) close to the cap plate (10), and a ratio of a size A of the tab (32) in the height direction of the secondary battery to a height B of the body (31) is in a range of 0.2 to 0.5.

6. The secondary battery according to any of claims 1 to 5, **characterized in that**, an interval is provided between the tab (32) and the cap plate (10) in the height direction.

7. The secondary battery according to any of claims 1 to 6, **characterized in that**, in the height direction, an end of the tab (32) away from the cap plate (10) extends beyond an end of the first connecting plate (41) away from the cap plate (10).

8. The secondary battery according to any of claims 1 to 7, **characterized in that**, the tab (32) is disposed on one side of the body (31) in the thickness direction of the secondary battery.

9. The secondary battery according to any of claims 1 to 8, **characterized in that**, two electrode assemblies (30) are disposed side by side in the thickness direction, and the tabs (32) of the two electrode assemblies (30) are respectively located on two sides of the two electrode assemblies (30) facing away from each other.

10. The secondary battery according to claim 9, **characterized in that**, two sides of the support plate (43) in the thickness direction of the secondary battery are connected with the first connecting plates (41) respectively, and the two first connecting plates (41) are fixedly connected to the tabs (32) on the same side respectively.

11. The secondary battery according to any of claims 1 to 10, **characterized in that**, the support plate (43) comprises a first part (431) and a second part (432) that are connected to each other, an area of cross section of the first part (431) is smaller than that of the second part (432), and the first connecting plate (41) is connected to the first part (431).

12. The secondary battery according to any of claims 1 to 11, **characterized in that**, the first connecting plate (41) extends in the thickness direction of the secondary battery, and the tab (32) is disposed between the first connecting plate (41) and the body (31).

13. The secondary battery according to any of claims 1 to 12, wherein the first connecting plate (41) is approximately vertical to the support plate (43).

14. The secondary battery according to any of claims 1 to 13, wherein an end of the tab (32) extends beyond the first connecting plate (41) along the thickness direction (X).

15. A vehicle, comprising the secondary battery according to any of claims 1 to 14.

**Patentansprüche**

1. Eine Sekundärbatterie, umfassend:

   eine Abdeckplatte (10);
   einen Elektrodenanschluss (20), der auf der Abdeckplatte (10) angeordnet ist;
   eine Elektrodenanordnung (30), umfassend einen Körper (31) und eine Lasche (32), die sich von dem Körper (31) erstreckt; und
   ein Verbindungselement (40), umfassend eine erste Verbindungsplatte (41), die mit der Lasche (32) verbunden ist, eine zweite Verbindungsplatte (42), die mit dem Elektrodenanschluss (20) verbunden ist, und eine Stützplatte (43), die die erste Verbindungsplatte (41) und der zweiten Verbindungsplatte (42) verbindet, wobei eine Breitenrichtung der Stützplatte (43) mit einer Dickenrichtung der Sekundärbatterie übereinstimmt,
   **dadurch gekennzeichnet, dass** mindestens ein Teil der Stützplatte (43) relativ zu der ersten Verbindungsplatte (41) zu einer Seite nahe dem Körper (31) vorsteht und der vorstehende Teil der Stützplatte (43) an dem Körper (31) befestigt ist, und
   ein minimaler Abstand zwischen der Stützplatte (43) und einer Bodenfläche der Elektrodenanordnung (30) in einer Höhenrichtung der Sekundärbatterie als eine nackte Höhe H des Körpers (31) auf seiner Seite definiert ist, eine Größe der Körper (31) in einer Längsrichtung der Sekundärbatterie als eine Körperlänge L definiert ist, und die nackte Höhe H und die Körperlänge L die folgende Beziehung erfüllen:

$$0,1 \leq H/L \leq 0,8.$$

2. Sekundärbatterie nach Anspruch 1, **dadurch gekennzeichnet, dass** sich in der Höhenrichtung ein Ende der ersten Verbindungsplatte (41) nahe der Abdeckplatte (10) über ein Ende der Lasche (32) nahe der Abdeckplatte (10) hinaus erstreckt.

3. Sekundärbatterie nach Anspruch 1 oder Anspruch 2, **dadurch gekennzeichnet, dass** die nackte Höhe H und die Körperlänge L die folgende Beziehung erfüllen:

$$0,2 \leq H/L \leq 0,6.$$

**4.** Sekundärbatterie nach einem der Ansprüche 1 bis 3, **dadurch gekennzeichnet, dass** die nackte Höhe H in einem Bereich von 18 mm bis 72 mm liegt und die Körperlänge L in einem Bereich von 90 mm bis 300 mm liegt.

**5.** Sekundärbatterie nach Anspruch 4, **dadurch gekennzeichnet, dass** die Lasche (32) auf einer Seite des Körpers (31) nahe der Abdeckplatte (10) angeordnet ist und ein Verhältnis einer Größe A der Lasche (32) in der Höhenrichtung der Sekundärbatterie zu einer Höhe B des Körpers (31) in einem Bereich von 0,2 bis 0,5 liegt.

**6.** Sekundärbatterie nach einem der Ansprüche 1 bis 5, **dadurch gekennzeichnet, dass** zwischen der Lasche (32) und der Abdeckplatte (10) in der Höhenrichtung ein Zwischenraum vorgesehen ist.

**7.** Sekundärbatterie nach einem der Ansprüche 1 bis 6, **dadurch gekennzeichnet, dass** sich in der Höhenrichtung ein von der Abdeckplatte (10) entferntes Ende der Lasche (32) über ein von der Abdeckplatte (10) entferntes Ende der ersten Verbindungsplatte (41) hinaus erstreckt.

**8.** Sekundärbatterie nach einem der Ansprüche 1 bis 7, **dadurch gekennzeichnet, dass** die Lasche (32) auf einer Seite des Körpers (31) in der Dickenrichtung der Sekundärbatterie angeordnet ist.

**9.** Sekundärbatterie nach einem der Ansprüche 1 bis 8, **dadurch gekennzeichnet, dass** zwei Elektrodenanordnungen (30) in der Dickenrichtung nebeneinander angeordnet sind und die Laschen (32) der zwei Elektrodenanordnungen (30) jeweils auf zwei voneinander abgewandten Seiten der beiden Elektrodenanordnungen (30) angeordnet sind.

**10.** Sekundärbatterie nach Anspruch 9, **dadurch gekennzeichnet, dass** zwei Seiten der Stützplatte (43) in der Dickenrichtung der Sekundärbatterie jeweils mit den ersten Verbindungsplatten (41) verbunden sind und die zwei ersten Verbindungsplatten (41) jeweils auf der gleichen Seite mit den Laschen (32) fest verbunden sind.

**11.** Sekundärbatterie nach einem der Ansprüche 1 bis 10, **dadurch gekennzeichnet, dass** die Stützplatte (43) einen ersten Teil (431) und einen zweiten Teil (432) umfasst, die miteinander verbunden sind, eine Querschnittsfläche des ersten Teils (431) kleiner als die des zweiten Teils (432) ist, und die erste Verbindungsplatte (41) mit dem ersten Teil (431) verbunden ist.

**12.** Sekundärbatterie nach einem der Ansprüche 1 bis 11, **dadurch gekennzeichnet, dass** sich die erste Verbindungsplatte (41) in der Dickenrichtung der Sekundärbatterie erstreckt und die Lasche (32) zwischen der ersten Verbindungsplatte (41) und der Körper (31) angeordnet ist.

**13.** Sekundärbatterie nach einem der Ansprüche 1 bis 12, wobei die erste Verbindungsplatte (41) ungefähr vertikal zu der Stützplatte (43) ist.

**14.** Sekundärbatterie nach einem der Ansprüche 1 bis 13, wobei sich ein Ende der Lasche (32) entlang der Dickenrichtung (X) über die erste Verbindungsplatte (41) hinaus erstreckt.

**15.** Fahrzeug, umfassend die Sekundärbatterie nach einem der Ansprüche 1 bis 14.

**Revendications**

**1.** Batterie secondaire, comprenant :

une plaque de couvercle (10) ;
**une borne d'électrode (20) disposée sur la plaque de couvercle (10) ; et**
un composant d'électrode (30) comprenant un corps (31) et une languette (32) s'étendant depuis du corps (31) ;
un élément de connexion (40), comprenant une première plaque de connexion (41) connectée à la languette (32), une deuxième plaque de connexion (42) connectée à la borne d'électrode (20) et une plaque de support (43) connectant la première plaque de connexion (41) et la deuxième plaque de connexion (42), une direction de largeur de la plaque de support (43) étant cohérente avec une direction d'épaisseur de la batterie secondaire,
**caractérisée en ce que**, au moins une partie de la plaque de support (43) fait saillie par rapport à la première plaque de connexion (41) vers un côté proche du corps (31), et la partie saillante de la plaque de support (43) est rapportée au corps (31), et
une distance minimum entre la plaque de support (43) et une surface inférieure du composant d'électrode (30) dans une direction de hauteur de la batterie secondaire est définie comme hauteur nue H du corps (31) à son côté, une taille du corps (31) dans une direction de longueur de la batterie secondaire est défini comme longueur du corps L, et la hauteur nue H et la longueur du corps L satisfont la relation suivante :

$$0{,}1 \leq H/L \leq 0{,}8.$$

**2.** Batterie secondaire selon la revendication 1, **carac-**

térisée en ce que dans la direction de hauteur, une extrémité de la première plaque de connexion (41) proche de la plaque de couvercle (10) s'étend au-delà d'une extrémité de la languette (32) proche de la plaque de couvercle (10).

3. Batterie secondaire selon la revendication 1 ou 2, **caractérisée en ce que** la hauteur nue H et la longueur du corps L satisfont la relation suivante :

$$0.2 \leq H/L \leq 0,6.$$

4. Batterie secondaire selon l'une quelconque des revendications 1 à 3, **caractérisée en ce que** la hauteur nue H est comprise entre 18 mm et 72 mm, et la longueur du corps L est comprise entre 90 mm et 300 mm.

5. Batterie secondaire selon la revendication 4, **caractérisée en ce que** la languette (32) est disposée sur un côté du corps (31) proche de la plaque de couvercle (10), et un rapport d'une taille A de la languette (32) dans la direction de hauteur de la batterie secondaire à une hauteur B du corps (31) est dans une plage de 0,2 à 0,5.

6. **Batterie secondaire selon l'une quelconque des revendications 1 à 5, caractérisée en ce qu'un** espace est prévu entre la languette (32) et la plaque de couvercle (10) dans la direction de hauteur.

7. Batterie secondaire selon l'une quelconque des revendications 1 à 6, **caractérisée en ce que** dans la direction de hauteur, une extrémité de la languette (32) éloignée de la plaque de couvercle (10) s'étend au-delà d'une extrémité de la plaque de connexion (41) proche de la plaque de couvercle (10).

8. Batterie secondaire selon l'une quelconque des revendications 1 à 7, **caractérisée en ce que** la languette (32) est disposée sur un côté du corps (31) dans la direction d'épaisseur de la batterie secondaire.

9. Batterie secondaire selon l'une quelconque des revendications 1 à 8, **caractérisée en ce que** deux composant d'électrode (30) sont disposés côte à côte dans la direction d'épaisseur, et les languettes (32) des composant d'électrode (30) sont respectivement situées sur deux côtés des deux composant d'électrode (30) à l'opposé l'un de l'autre.

10. Batterie secondaire selon la revendication 9, **caractérisée en ce que** deux côtés de la plaque de support (43) dans la direction d'épaisseur de la batterie secondaire sont connectés respectivement aux premières plaques de connexion (41), et les deux premières plaques de connexion (41) sont connectées respectivement aux languettes (32) sur le même côté.

11. Batterie secondaire selon l'une quelconque des revendications 1 à 10, **caractérisée en ce que** la plaque de support (43) comprend une première partie (431) et une seconde partie (432) connectées l'une à l'autre, une zone de section transversale de la première partie (431) étant inférieure à celle de la seconde partie (432), et la première plaque de connexion (41) étant connectée à la première partie (431).

12. Batterie secondaire selon l'une quelconque des revendications 1 à 11, **caractérisée en ce que** la première plaque de connexion (41) s'étend dans la direction d'épaisseur de la batterie secondaire, et la languette (32) est disposée entre la première plaque de connexion (41) et le corps (31).

13. Batterie secondaire selon l'une quelconque des revendications 1 à 12, dans laquelle la première plaque de connexion (41) est approximativement verticale par rapport à la plaque de support (43).

14. Batterie secondaire selon l'une quelconque des revendications 1 à 13, dans laquelle une extrémité de la languette (32) s'étend au-delà de la première plaque de connexion (41) dans la direction d'épaisseur (X).

15. Voiture, comprenant la batterie secondaire selon l'une quelconque des revendications 1 à 14.

FIG. 1

FIG.2

FIG. 3

FIG. 4

<u>30</u>

FIG. 5

<u>40</u>

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107369853 A